# EUROPEAN PATENT APPLICATION

(11) **EP 1 321 849 A2**
(43) Date of publication of application: **25.06.2003**
(21) Application number: 02028712.4
(22) Date of filing: 19.12.2002
(51) Int. Cl.: G06F 3/12

(54) **Print data output system and print data output program**

(30) Priority: 20.12.2001 JP 2001387337
(71) Applicant: Riso Kagaku Corporation, Tokyo 105 (JP)
(72) Inventor: Akiyama, Hideki, Riso Kagaku Corporation, Inashiki-gun, Ibaraki-ken (JP); Inamine, Noboru, Riso Kagaku Corporation, Inashiki-gun, Ibaraki-ken (JP)
(74) Representative: Klunker . Schmitt-Nilson . Hirsch

(57) **Abstract**

A print data output system outputs print data to a printer having a plurality of built-in printing engines. One of the built-in printing engines is selected and print data conforming to the selected printing engine is generated and the generated print data is output to the printer.

## Description

### BACKGROUND OF THE INVENTION

### Field of the Invention

This invention relates to a print data output system and a print data output program, and more particularly to a system and a program for converting a file to be printed into print data and outputting the print data to a printer having a plurality of printing engines built in the printer.

### Description of the Related Art

When printing a file created, for instance, by an application software by the use of a printer, it is necessary for the user to start the application software, to open the file to be printed and to cause the application software to issue an instruction to print the file, e.g. to click a "print button" prepared in a tool menu of the application software. Then a printer driver conforming to the printer by which the file is to be printed is selected from the printer drivers installed in the computer. The selected printer driver outputs to the printer print data comprising the file to be printed and print information representing the resolution at which the file is to be printed, the copy size, and/or the number of copies which are written in a language readable to a print control system installed in the printer. Then the print control system decodes the print data into image data readable to a printing engine of the printer and the image data is sent to the printing engine of the printer.

Since the printing engine can deal with only specific resolutions and understand only a specific printer language, the print control system as well as the printer driver is usually in one-to-one correspondence with the printing engine.

As the printer, there are various types of printers such as a laser beam printer, an ink jet printer, a dot printer, a ribbon printer, a stencil printer and the like which are driven by printing engines of different systems. For example, the printing engine for the stencil printer makes a stencil according to the image data (print data) with a thermal head for each page of print data and transfers ink to printing papers through the stencil, thereby printing each page of print data on printing papers. Whereas, in printers other than the stencil printer, no stencil is used. For example, in the case of a laser beam printer, the printing engine causes a photosensitive drum to be imagewise exposed to a laser beam according to each page of the image data (print data), thereafter causes toner to adhere to the exposed part of the photosensitive drum, and transfers the toner of the photosensitive drum to a printing paper.

Since the printing engines for different types of printers differ from each other in printing system, the time and/or cost required to output one copy greatly differs from each other depending on the type of the printer.

The following table 1 shows the time and cost required to output one copy in the case of a stencil printer (SP) versus the time and cost required to output one copy in the case of a laser beam printer (LBP) when the stencil printer and the LBP outputs output the same copies.

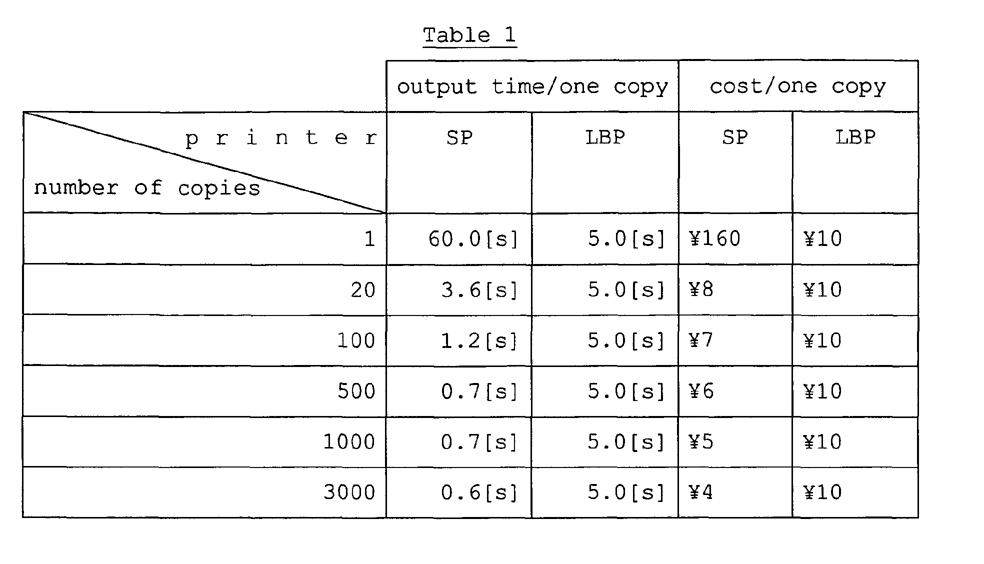

As can be understood from table 1, in the case of the stencil printer, the output time per one copy is shortened as the total number copies to be printed increases and the cost per one copy is reduced as the total number copies to be printed increases since it is necessary to make a stencil irrespective of the number of copies to be printed. On the other hand, in the case of the laser beam printer, the output time per one copy and the cost per one copy are both constant irrespective of the number of copies to be printed. Accordingly, the stencil printer is advantageous over the laser beam printer (or other printers) when the total number of copies to be printed (of the same contents) is large whereas the laser beam printer (or other printers) is advantageous over the stencil printer when the total number of copies to be printed (of the same contents) is small.

This causes a demand for a system in which an optimal printing system can be selected from the viewpoint of both the output time and the cost. For example, it is preferable if a stencil printer can be selected when a relatively large number of same copies are to be printed and a printer other than a stencil printer can be selected when a relatively small number of same copies are to be printed.

However, since it is difficult to install a plurality of printers of different printing systems in an office whose space is limited, there is a demand that a single printer can deal with a plurality of different printing systems. In order to meet this demand, there has been proposed a printer comprising a single housing and a plurality of printing engines built in the housing.

However, since the printing engines and the printer drivers are in one-to-one correspondence as described above, in order to cause the printer with a plurality of printing engine to print a file according to print data output from a computer, it is necessary for the computer to be provided with a plurality of printer drivers each corresponding to one of the printing engines in the printer. When a printer driver selecting screen showing all the printer drivers which can be selected is displayed, the user cannot know whether a plurality of printers are available or a single printer with a plurality of printing engines is available, which embarrasses the user in selecting the printer driver.

It is often the case that common data (data of the same contents) is printed on a part of a large number of printing media and discrete data is printed on a different part of each printing medium. For example, when printing New Year's cards, the New Year's greetings and/or a picture are generally printed on the back of all the postcards as common data, and the address and the name of the destination is printed on the front of the postcard as the discrete data. In such a case, it is advantageous to use a stencil printer to print the common data on the back of the postcards and to use a printer other than a stencil printer to print the discrete data on the front of the postcards. In order to realize this, it is conventionally necessary for the user to go to a pair of printers. which differ from each other in printing system and to set the cards in place with respect to each printer. Further, the user usually must watch the printer printing the data to be printed first since if wrong data is printed on the side of the postcards, the postcards run to waste, which restrict the user in his or her movements during the printing.

Such a problem can be overcome by installing a single printer with a plurality of printing engines (e.g., a printing engine for stencil printing and a printing engine for ink jet printing) and providing a paper transfer mechanism between the printing engines. The printer driver which outputs print data to such a printer must provide the printer with print linking information representing whether the printing papers are to be discharged or transferred to another printing engine after printing by one printing engine is finished. To add to each printer driver a function of providing print linking information to the printer adds to the cost and at the same time, it is necessary to match the printer drivers with each other, which is troublesome.

### SUMMARY OF THE INVENTION

In view of the foregoing observations and description, the primary object of the present invention is to provide a print data output system which can efficiently output print data to a printer having a plurality of built-in printing engines.

Another object of the present invention is to provide a program for causing a computer to execute improved procedure for outputting print data to a printer having a plurality of built-in printing engines.

In accordance with a first aspect of the present invention, there is provided a print data output system for outputting print data to a printer having a plurality of built-in printing engines, comprising
a printing engine selecting means which selects one of the plurality of built-in printing engines,
a print data generating means which generates print data conforming to the printing engine selected by the printing engine selecting means, and
a print data output means which outputs the print data generated by the print data generating means to said printer.

The "print data" as used here means data obtained by converting a file made by application software into data of format readable to the printing engine control system of the printer. The print data may include print setting information such as on the size of printing paper, and the number of copies to be printed in addition to the printing contents, i.e., the image data.

Further, since the printing engine can understand only a specific printer language, the "print data conforming to the printing engine" means print data in a printer language understandable to the printing engine.

The print data output system of the present invention may be provided with a destination direction means which generates printing engine designating information for designating the printing engine selected by the printing engine selecting means and attaches the printing engine designating information to the print data.

The "printing engine designating information" as used here may be, for instance, a command included in the print data.

The print data output system of the present invention may be further provided with a print linking direction means which sets whether printing papers on which a piece (a first piece) of print data have been printed by one of the printing engines are to be printed with another piece (a second piece) of print data by another printing engine, generates print linking information representing the contents of the setting, and attaches the print linking information to the print data.

The second piece of data may be identified, for instance, by identifying data including information representing that the data is to be linked with the first piece of print data as the second piece of data or by identifying data sent immediately after the first piece of print data as the second print data.

It is preferred that the print data output system be provided with a printing side direction means which generates printing side designating information representing on which side of the printing paper the second piece of print data is to be printed, on the same side as or the opposite side to the first piece of print data, and attaches the printing side designating information to the first or second piece of print data.

Further, it is preferred that the plurality of printing engines be all different from each other in printing system and it is especially preferred that one of the printing engines be a stencil printing engine in order to improve the printing process efficiency by selectively using one of a plurality of printing engines depending upon circumstances.

In accordance with a second aspect of the present invention, there is provided a print data output program for outputting print data to a printer having a plurality of built-in printing engines characterized by causing a computer to perform a printing engine selecting procedure of selecting one of the printing engines,
a print data generating procedure of generating print data conforming to the printing engine selected by the printing engine selecting means, and
a print data output procedure of outputting the print data generated by the print data generating means to said printer.

It is preferred that the print data output program of the second aspect causes the computer to further perform a destination direction procedure of generating printing engine designating information for designating the printing engine selected by the printing engine selecting means and attaching the printing engine designating information to the print data.

In accordance with the present invention, since print data sent to a printer is conforming to the printing engine selected by the printing engine selecting means, the printing engine to print the print data can be automatically selected from the printing engines installed in the printer on the basis of the print data sent, whereby a printer in which a plurality of different printing engines are provided and one of the printing engines can be selectively used on the basis of the kind of the print data can be realized.

Further, a printer driver formed in accordance with the present invention can control a printer having a plurality of printing engines without embarrassing the user.

When the print data output system of the present invention is provided with a destination direction means which generates printing engine designating information for designating the printing engine selected by the printing engine selecting means and attaches the printing engine designating information to the print data, the printer need not decode the print data and the printing engines can be switched on the basis of the printing engine designating information, whereby load on the printer can be lightened.

When the print data output system of the present invention is further provided with a print linking direction means which sets whether printing papers on which a piece (a first piece) of print data have been printed by one of the printing engines are to be printed with another piece (a second piece) of print data by another printing engine, generates print linking information representing the contents of the setting, and attaches the print linking information to the print data, a printer in which printing papers can be transferred from one of the printing engines to another can print a plurality of pieces of data on the basis of the print linking information without necessity for the user to reset the printing papers or to watch the printer printing the data to be printed first, whereby the printing process can be done efficiently and useless printing due to user's mistake can be avoided.

When the print data output system of the present invention is provided with a printing side direction means which generates representing on which side of the printing paper the second piece of print data is to be printed, on the same side as or the opposite side to the first piece of print data, and attaches the printing side designating information to the first or second piece of print data, a printer in which printing papers can be transferred from one of the printing engines to another and the direction of the transferred printing papers can be controlled can print a pair of pieces of print data on opposite sides of the printing papers by different printing engines on the basis of the printing side designating information without necessity for the user to reset the printing papers. Accordingly, printing a pair of pieces of print data on opposite sides of the printing papers with different printing engines as in the example of postcards described above can be realized with a single printer.

When the print data output program in accordance with the second aspect of the present invention is installed in a computer, the computer can be caused to function as a print data output system in accordance with the first aspect of the present invention.

### BRIEF DESCRIPTION OF THE DRAWINGS

Figure 1 is a view schematically showing a print system in which a print data output system in accordance with an embodiment of the present invention works,
Figure 2A is a view showing an example of a printer setting screen in a state where the stencil/ribbon printer is selected,
Figure 2B is a view showing an example of a printing side setting screen displayed when "Stencil printing (linked with Ribbon printing)" or "Ribbon printing (linked with Stencil printing)" is selected on the printer setting screen,
Figure 2C is a view showing a screen displayed after the printing side is set on the printing side setting screen,
Figure 3 is a block diagram showing the structure of the stencil/ribbon printer employed in the print system,
Figures 4 to 6 are a flow chart for illustrating the operation of the print system shown in Figure 1,
Figure 7A shows an example of the back side of New Year' s cards, and
Figure 7B shows an example of the front side of New Year's cards.

### DESCRIPTION OF THE PREFERRED EMBODIMENTS

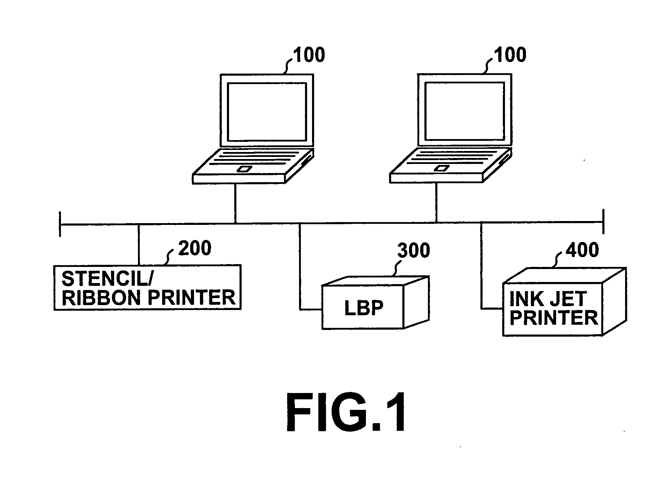

In Figure 1, a print system including a stencil/ribbon printer 200 provided with a stencil printing engine and a ribbon printing engine is connected to computers 100 by way of a network. A laser beam printer 300 and an ink jet printer 400 are further connected to the network. Printer drivers for the laser beam printer 300 and the ink jet printer 400 are installed in each of the computers 100 as well as a printer driver for the stencil/ribbon printer 200 in accordance with an embodiment of the present invention. By designating one of the printer drivers on the computer side, data representing a file to be printed is converted into print data by the designated printer driver and is output to the corresponding printer. At this stage, to designate a printer driver is substantially the same as to designate a printer. That is, when the printer driver of the laser beam printer 300 is designated, data representing a file to be printed is converted by the printer driver for the laser beam printer 300 into print data in the form required by the print control system and the printing engine for the laser beam printer 300 and the print data is output to the laser beam printer 300. Similarly, when the ink jet printer 400 is designated, data representing a file to be printed is converted by the printer driver for the ink jet printer 400 into print data in the form required by the print control system and the printing engine for the ink jet printer 400 and the print data is output to the ink jet printer 400. Though the stencil/ribbon printer 200 is provided with both a printing engine for the stencil printing and a printing engine for the ribbon printing, the printer driver in the computers 100 displays a printer setting screen on which the user can select the stencil/ribbon printer 200 but cannot separately select the stencil printing engine or the ribbon printing engine.

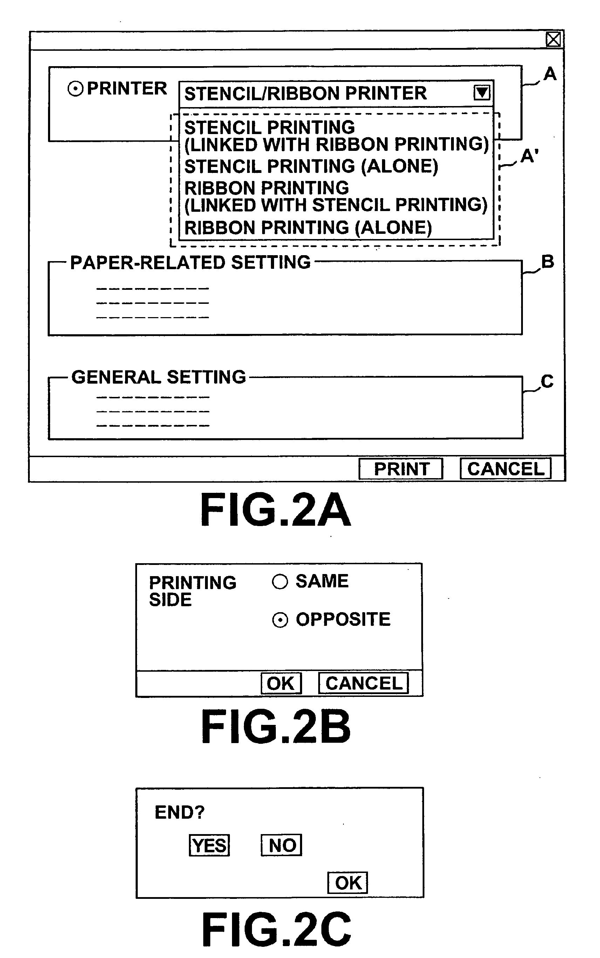

Figure 2A shows an example of a printer setting screen (displayed on the display of the computer 100) in a state where the stencil/ribbon printer 200 is selected, Figure 2B shows an example of a printing side setting screen displayed when "Stencil printing (linked with Ribbon printing)" or "Ribbon printing (linked with Stencil printing)" (to be described later) is selected on the printer setting screen, and Figure 2C shows a screen displayed after the printing side is set on the printing side setting screen.

On the printer setting screen, there are provided a printer selecting dialog box A for selecting one of the stencil/ribbon printer 200, the laser beam printer 300 and the ink jet printer 400, a paper-related setting dialog box B for setting items related to the printing paper such as the paper size, the paper direction and/or the paper supply tray, and a general setting dialog box C for setting other items such as the number of copies to be printed. Different paper-related setting dialog box B and general setting dialog box C are displayed according to the printer selected. When the stencil/ribbon printer 200 is selected in the printer selecting dialog box A, a printing engine selecting dialog box A' is displayed. In the printing engine selecting dialog box A', one of four options, "Stencil printing (linked with Ribbon printing)", "Stencil printing (alone)", "Ribbon printing (linked with Stencil printing)" and "Ribbon printing (alone)" is selected. For example, when "Stencil printing (linked with Ribbon printing)" is selected, the printer driver for the stencil/ribbon printer 200 converts the data representing a file to be printed into print data in a printer language readable to the stencil printing engine of the stencil/ribbon printer 200 and attaches the print data with print linking information representing that another piece of print data is to be printed on the printing paper by ribbon printing after the print data is printed thereon by stencil printing. Similarly, when "Ribbon printing (linked with Stencil printing)" is selected, the printer driver for the stencil/ribbon printer 200 converts the data representing a file to be printed into print data in a printer language readable to the ribbon printing engine of the stencil/ribbon printer 200 and attaches the print data with print linking information representing that another piece of print data is to be printed on the printing paper by stencil printing after the print data is printed thereon by ribbon printing. Further, when "Stencil printing (linked with Ribbon printing)" or "Ribbon printing (linked with Stencil printing)" is selected, the printing side setting dialog box shown in Figure 2B is displayed. This is for setting whether the second print data is to be printed on the same side as the first print data or the opposite side to the first print data. Then printing side designating information representing on which side of the printing paper the second piece of print data is to be printed is attached to the print linking information by the printer driver for the stencil/ribbon printer 200. When "Stencil printing (linked with Ribbon printing)" or "Ribbon printing (linked with Stencil printing)" is selected, the print data is once stored in a memory of the computer allotted to the printer buffer.

When "Stencil printing (alone)" or "Ribbon printing (alone)" is selected, the printer driver for the stencil/ribbon printer 200 converts the data representing a file to be printed to print data in a printer language readable to the corresponding printing engine of the stencil/ribbon printer 200 and attaches the print data with print linking information representing that no additional piece of print data is to be printed on the printing paper.

When "Stencil printing (linked with Ribbon printing)" or "Ribbon printing (linked with Stencil printing)" is selected and setting of the first print data (the print data to be printed first by stencil printing or ribbon printing) is completed, setting of the second print data (the print data to be printed on the same printing paper after the first print data is printed) is performed on the computer side. That is, the application software by which the second data is generated is first started up and a piece of data is opened. When the application software issues a print instruction, the printer setting screen shown in Figure 2A is displayed. Then, when "Stencil printing (linked with Ribbon printing)" has been selected for the first print data, the data opened by the software application is set as the second data by selecting "Ribbon printing (linked with Stencil printing)". The printer driver for the stencil/ribbon printer 200 converts the second data into print data in a printer language readable to the ribbon printing engine of the stencil/ribbon printer 200, and stores the second print data in the printer buffer where the first print data has been stored. A plurality of pieces of data may be set as the second data, and the screen shown in Figure 2C is displayed each time a piece of second print data is set. This is repeated until "YES" is selected and "OK" button is clicked on the screen shown in Figure 2C. The plurality of pieces of data stored in the printer buffer are output to the stencil/ribbon printer 200.

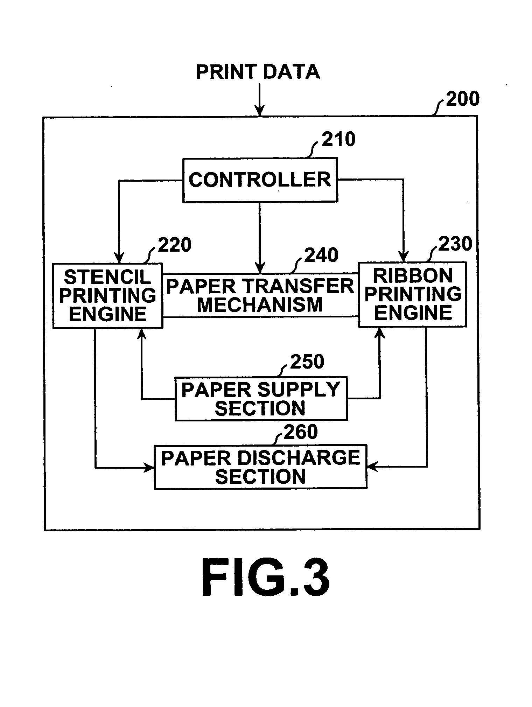

Figure 3 is a block diagram showing the structure of the stencil/ribbon printer 200 employed in the print system shown in Figure 1.

In Figure 3, the stencil/ribbon printer 200 comprises a controller 210, a stencil printing engine 220, a ribbon printing engine 230, a paper transfer mechanism 240 with a paper reversing mechanism which transfers the printing paper from one of the stencil printing engine 220 and the ribbon printing engine 230 to the other, a paper supply section 250 which supplies virgin printing papers to the stencil printing engine 220 and the ribbon printing engine 230, and a paper discharge section 260 which stores printing papers discharged from the stencil printing engine 220 and the ribbon printing engine 230. The controller 210 decodes print data sent from the computer 100, more strictly, from the printer driver for the stencil/ribbon printer 200 installed in the computer 100. When the print data is in the printer language corresponding to the stencil printing engine 220, the controller 210 converts the print data into image data readable to the stencil printing engine 220 and outputs the image data to the stencil printing engine 220, whereas when the print data is in the printer language corresponding to the ribbon printing engine 230, the controller 210 converts the print data into image data readable to the ribbon printing engine 230 and outputs the image data to the ribbon printing engine 230. Further, the controller 210 decodes the print linking information included in the print data and controls transfer of the printing paper by the paper transfer mechanism 240 on the basis of the print linking information.

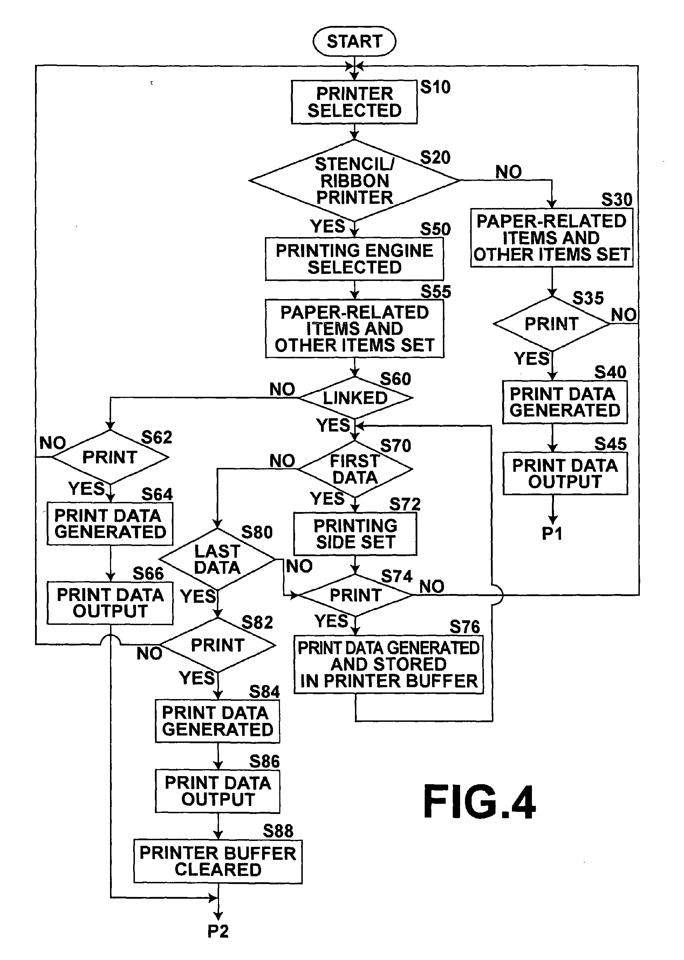

Operation of the print system shown in Figure 1 will be described in detail with reference to the flow chart shown in Figures 4 to 6, hereinbelow.

Figure 4 shows a part of the flow chart for illustrating the procedure of printer selection on the computer 100 side and the flow chart of the operation of the selected printer. When the user starts up the application software and the application software issues a print instruction, printing action of the print system shown in Figure 1 is started.

The user selects a printer by the printer (or the printer driver) setting screen shown in Figure 2A. (step S10) When the laser beam printer 300 or the ink jet printer 400 is selected, the printer driver for the corresponding printer shows to the user a paper-related setting screen for setting items related to the printing paper such as the paper size and/or the paper direction and a general setting screen for setting other items and the user sets these items by the screens. (steps S20 and S30) When "Print" button shown in Figure 2A is clicked (that "Print" button is clicked will be referred to as "print instruction is issued", hereinbelow) after the setting, the file to be printed is converted into print data and the print data is output to the selected printer (the laser beam printer 300 or the ink jet printer 400). (steps S35, S40 and S45)

Whereas, when the stencil/ribbon printer 200 is selected in step S10, the printer driver for the stencil/ribbon printer 200 shows a printing engine selecting dialog box A' shown in Figure 2A to allow the user to select one of the stencil printing engine or the ribbon printing engine and shows a paper-related setting dialog box B and a general setting dialog box C to allow the user to set these items. (steps S20, S50 and S55) When "Stencil printing (alone)", or "Ribbon printing (alone)" is selected and print instruction is issued, the printer driver for the stencil/ribbon printer 200 converts the file to be printed to print data in a printer language conforming to the selected printer engine (the stencil printing engine 220 or the ribbon printing engine 230) and outputs the print data to the stencil/ribbon printer 200 with print linking information representing that no additional piece of print data is to be printed on the printing paper attached to the print data. (steps S60, S62, S64 and S66)

When "Stencil printing (linked with Ribbon printing)", or "Ribbon printing (linked with Stencil printing) " is selected in step S60, the printer driver for the stencil/ribbon printer 200 searches the printer buffer of the computer 100 and determines whether the data currently involved in setting is a piece of second data to be printed on the same printing paper after a first piece of data is printed on the printing paper. (step S70) For example, when "Stencil printing (linked with Ribbon printing)" is selected for the data currently involved in setting, and when there is a piece of data having print linking information, "Ribbon printing (linked with Stencil printing)", the data currently involved in setting is second data whereas when there is no piece of data having print linking information, "Ribbon printing (linked with Stencil printing)", the data currently involved in setting is first data.

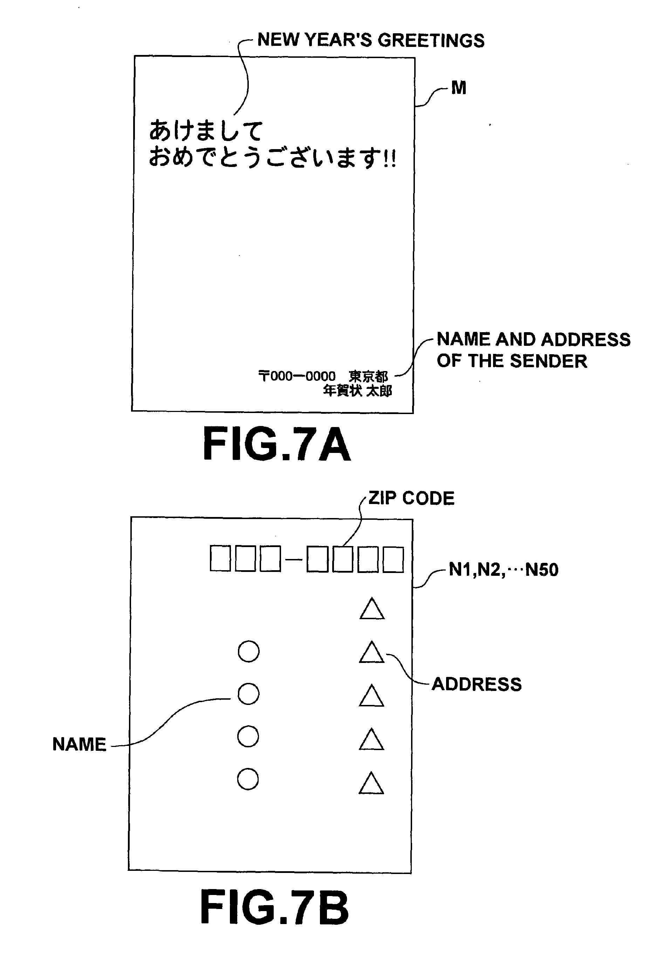

When it is determined in step S70 that the data currently involved in setting is first data, the printer driver for the stencil/ribbon printer 200 shows the printing side setting screen shown in Figure 2B to the user and the user sets the printing side. (step S72) For the purpose of simplicity, it is assumed here that the user intends to print fifty New Year's cards with the New Year's greetings and the name and address of the sender printed on the back of all the postcards as shown in Figure 7A and with the address and the name of the destination printed postcard by postcard on the front of the postcard as shown in Figure 7B. The New Year's greetings and the name and address of the sender to be printed on the back of all the postcards are common data to be printed on all the postcards and will be referred to as "common data M", and the address and the name of the destination to be printed on the front of the postcard differ postcard to postcard and will be referred to as "discrete data N1, N2, ······ N50".

In this case, the user selects "Stencil printing (linked with Ribbon printing)" for the common data M in step S50, sets the number of copies to fifty in step S55 and sets the printing side to "opposite" in step S72. When "print instruction is issued" (step S74: YES), the printer driver for the stencil/ribbon printer 200 attaches the print data with the print linking information representing that the first data is to be printed by stencil printing and the second data is to be printed by ribbon printing ("Stencil printing (linked with Ribbon printing)") and that the second data is to be printed on the side opposite to the first data ("opposite"). The print data with the print linking information is once stored in the printer buffer. (step S76)

After setting for the common data or the first data M is ended, the user is allowed to effect printing action on second data or other data. Here printing action on the second data N1 will be described by way of example. Assuming that the user has opened the data N1, the application software has issued print instruction, steps S10 to S55 have been executed, and "Ribbon printing (linked with Stencil printing)" is selected in step S50, the printer driver for the stencil/ribbon printer 200 determines that data N1 is a piece of second data since in this case, there is a piece of data having print linking information, "Stencil printing (linked with Ribbon printing)". That is, answer to the question in step S70 is NO in this case. Then the printer driver for the stencil/ribbon printer 200 shows the screen shown in Figure 2C to the user for the data N1 determined to be a piece of second data and the user sets whether the data N1 is the last piece of data to be printed linked with the first data M. (step S80) In this case, the user sets in step S80 that the data N1 is not the last piece of data to be printed linked with the first data M and when print instruction is issued (step S74), the printer driver for the stencil/ribbon printer 200 converts the data N1 to print data in a printer language conforming to the ribbon printing engine 230 and stores the print data in the printer buffer. (step S76) In the similar manner, the pieces of data N2 to N49 are stored in the printer buffer in the form of a plurality of pieces of print data.

The data N50 is set in step S80 to be the last piece of data to be printed linked with the first data M and when print instruction is issued (step S82), the printer driver for the stencil/ribbon printer 200 converts the data N50 to print data in a printer language conforming to the ribbon printing engine 230 and outputs to the stencil/ribbon printer 200 in sequence the print data converted from the data N50 together with the pieces of print data stored in the printer buffer (the first data M and the pieces of print data converted from the pieces of second data N1 to N49). (steps S84 and S86) Thereafter the printer driver clears the printer buffer. (step S88)

The pieces of second data N1, N2, ······ N50 are set in step S55 to be one in number of copies.

Print setting operation and action of the printer drivers on the computer 100 side have been described above. Action on the printer side upon receipt of the print data will be described, hereinbelow.

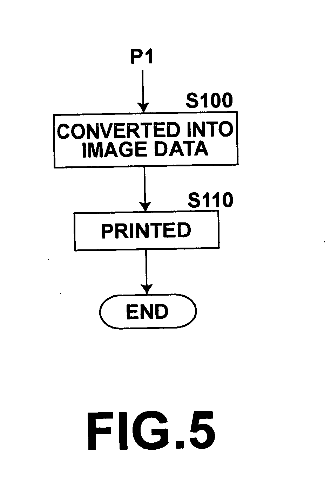

First, action of the laser beam printer 300 and the ink jet printer 400 will be described with reference to Figure 5. As shown in Figure 5, when the laser beam printer 300 receives print data from the printer driver for the laser beam printer 300, the controller of the laser beam printer 300 converts the print data into image data and outputs the image data to the printing engine of the laser beam printer 300. (step S100) When receiving the image data, the printing engine of the laser beam printer 300 prints the image data. (step S110) Similarly, when the ink jet printer 400 receives print data from the printer driver for the ink jet printer 400, the controller of the ink jet printer 400 converts the print data into image data and outputs the image data to the printing engine of the ink jet printer 400. (step S100) When receiving the image data, the printing engine of the ink jet printer 400 prints the image data. (step S110)

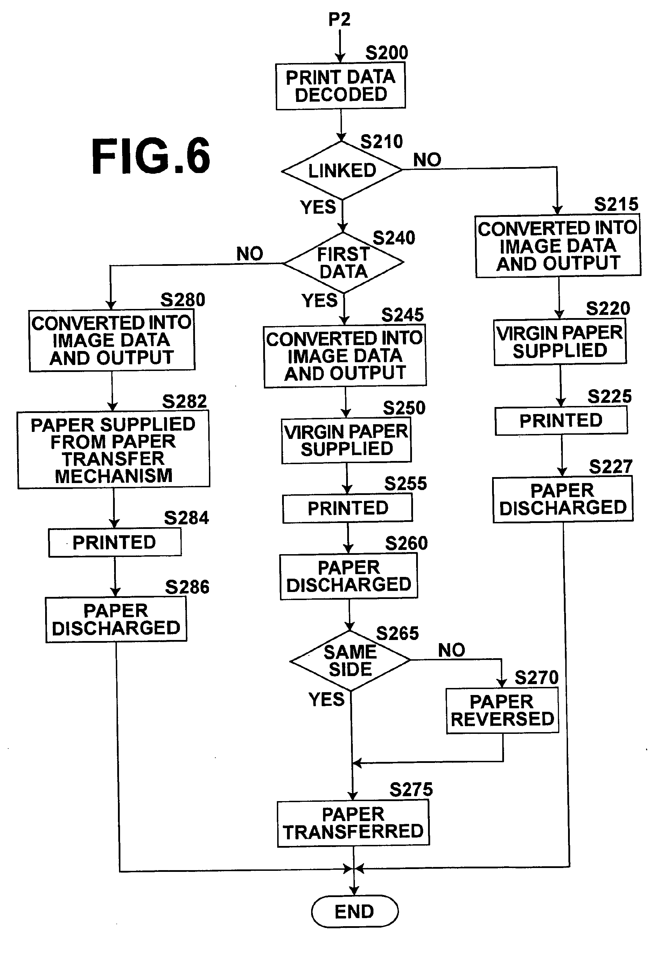

As shown in Figure 6, when the stencil/ribbon printer 200 receives print data from the printer driver for the stencil/ribbon printer 200, the controller 210 (a printing engine control system in accordance with an embodiment of the present invention) decodes the print data and determines the kind of the printer language in which the print data is expressed. At the same time the controller 210 obtains print linking information included in the print data. (step S200) When the print linking information obtained represents "alone", the controller 210 selects one of the stencil printing engine 220 and the ribbon printer engine 230 according to the kind of the printer language in which the print data is expressed, and converts the print data into image data in a printer language conforming to the selected printing engine, and then outputs the image data to the selected printing engine. (steps S210 and S215) At the same time, the controller 210 causes the paper supply section 250 to supply a virgin printing paper and causes the printing engine to print the image data. (steps S220 and S225) The printed papers are discharged to the paper discharge section 260 and are stocked there. (step S227)

Whereas, when it is determined in step S210 that the print linking information obtained represents "Stencil printing (linked with Ribbon printing)" or "Ribbon printing (linked with Stencil printing)", the controller 210 determines whether the print data comes from first data. (step S240) For the purpose of simplicity, it is assumed here that the user intends to print fifty New Year's cards shown in Figures 7A and 7B. Further, print data converted from the "common data M" will be referred to as the "common print data M'" or "first print data M'", and print data converted from the "discrete data N1, N2, ······ N50" will be referred to as the "discrete print data N1', N2', ······ N50'" or "second print data N1', N2', ··· ··· N50'", hereinbelow.

The controller 210 receives the print data M', and pieces of print data N1', N2', ······ N50' in sequence. When receiving the print data M', the controller 210 selects the stencil printing engine 220 as the printing engine for printing the print data M' on the basis of the printer language in which the print data M' is expressed and determines that the print data M' is the first data on the basis of the print linking information attached to the pint data M' . (steps S200, S210 and S240) The controller 210 converts the print data M' into image data in a printer language conforming to the stencil printing engine 220, and then outputs the image data to the stencil printing engine 220. At the same time, the controller 210 causes the paper supply section 250 to supply a virgin printing paper to the stencil printing engine 220 and causes the stencil printing engine 220 to make a stencil and to print the image data in a predetermined number of copies (fifty in this particular example) using the made stencil. (steps S245, S250 and S255) Further, the controller 210 causes the stencil printing engine 220 to discharge the printing papers on which the first print data M' is printed to the paper transfer mechanism 240. (step S260) Further, since the print linking information indicates that the second print data is to be printed on the side of the printing paper opposite to the first print data, the controller 210 causes the paper reversing mechanism of the paper transfer mechanism 240 to turn over the printing paper and then causes the paper transfer mechanism 240 to transfer the reversed printing paper to the ribbon printing engine 230. (steps S265, S270 and S275)

The stencil/ribbon printer 200 receives a piece of print data N1' after the first print data M'. The controller 210 determines that the print data N1' is a piece of second data on the basis of the fact that the print data N1' is not a leader of pieces of print data which are sent in a group, and converts the print data N1' into image data in a printer language conforming to the ribbon printing engine 230 determined in step S200, and then outputs the image data to the ribbon printing engine 230. (steps S240 and S280) At the same time, the controller 210 causes the paper transfer mechanism 240 to supply first one of the printing papers, on which the first print data M' has been printed, in a reversed state and causes the ribbon printing engine 230 to print the image data converted from the print data N1. (steps S282 and S284) The printing paper printed with data M' and N1' on opposite sides thereof is discharged to the paper discharge section 260 and is stocked there. (step S286)

Though, in this embodiment, the printing paper is transferred to the ribbon printing engine 230 which prints the second print data N' (pieces of print data N1' to N50') each time printing of the first data M' on the printing paper is completed, a predetermined number of printing papers which have been printed with the first print data M' may be once stocked in a stock means provided between the stencil printing engine 220 and the paper transfer mechanism 240 or between the ribbon printing engine 230 and the paper transfer mechanism 240 and then transferred to the ribbon printing engine 230.

The stencil/ribbon printer 200 further receives the other pieces of second print data N2', ······ N50' in sequence, and processes them in the same manner as the print data N1'.

As can be understood from the description above, since the printer driver for the stencil/ribbon printer 200 in accordance with this embodiment of the present invention generates print data conforming to the selected printing engine of a printer, a print system in which a plurality of different printing engines are provided and one of the printing engines can be selectively used on the basis of the kind of the print data, i.e., the printer language in which the print data is written, can be realized.

Further, since showing a printer setting screen on which the user does not select a printer driver but selects a printer, the printer driver for the stencil/ribbon printer 200 in accordance with this embodiment of the present invention can control a printer having a plurality of printing engines without embarrassing the user.

Further since print linking information representing whether printing papers on which a piece (a first piece) of print data have been printed by one of the printing engines are to be printed with another piece (a second piece) of print data by another printing engine is attached to the first piece of print data, a printer in which printing papers can be transferred from one of the printing engines to another can print a plurality of pieces of data on the basis of the print linking information without necessity for the user to reset the printing papers or to watch the printer printing the data to be printed first, whereby the printing process can be done efficiently and useless printing due to user's mistake can be avoided.

Further, since printing side designating information representing on which side of the printing paper the second piece of print data is to be printed, on the same side as or the opposite side to the first piece of print data is attached to the first piece of print data, a printer in which printing papers can be transferred from one of the printing engines to another and the direction of the transferred printing papers can be controlled can print a pair of pieces of print data on opposite sides of the printing papers by different printing engines on the basis of the printing side designating information without necessity for the user to reset the printing papers. Accordingly, printing a pair of pieces of print data on opposite sides of the printing papers with different printing engines as in the example of postcards described above can be realized with a single printer.

Though, in the embodiment described above, the printer driver for the stencil/ribbon printer 200 in accordance with this embodiment of the present invention conforms to a printer which selects the printing engine on the basis of the printer language in which the print data is written and does not add printing engine designating information for designating the printing engine to the print data, the print data output system may be arranged to add such printing engine designating information in the form of a command. In this case, since the printer need not decode the print data and the printing engines can be switched on the basis of the printing engine designating information, load on the printer can be lightened.

Though a preferred embodiment of the present invention has been described above, the printing engine control system of the present invention need not be limited to the embodiment described above, but may be variously modified.

For example, though the controller 210 of the stencil/ribbon printer 200 shown in Figure 3 decodes the print data sent thereto to select one of the stencil printing engine 220 and the ribbon printing engine 230 on the basis of the printer language in which the print data is expressed and at the same time converts the print data into image data conforming to the selected printing engine, it is possible to arrange the print data output system in accordance with the present invention may be applied to a print system comprising a plurality of printing engines, a control system which effects only selection of the printing engine and control of the paper transfer mechanism and controllers provided to the respective printing engines to convert the print data into the image data.

Further, though, in the print system shown in Figure 1, the printer driver of the stencil/ribbon printer 200 attaches the print linking information to the first print data and once stores them together with the second print data in a printer buffer provided on the computer side, load on the computer can be lightened by providing a printer buffer on the printer, e.g., the stencil/ribbon printer 200 and storing the first print data and the second print data in the printer buffer.

Further, though, attaching the printing side designating information to the print linking information of the first piece of print, the printer driver for the stencil/ribbon printer 200 in accordance with the embodiment described above may attach the printing side designating information to the second piece of print data.

Further, though, in the embodiment described, the print data output system of the present invention is applied to a printer having only a pair of printing engines built therein, i.e., a stencil printing engine and a ribbon printing engine, the print data output system of the present invention may be applied to a printer having three or more printing engines built therein. At the same time, the printing engines may be of any combination of a stencil printing engine, a laser beam printing engine, a ribbon printing engine, an ink jet printing engine and the like depending upon the circumstances.

When the print data output program in accordance with the second aspect of the present invention is installed in a computer, the computer can be caused to function as a print data output system in accordance with the first aspect of the present invention.

The program may be recorded in a computer readable medium so that the printer can perform the method when loaded with the recording medium. A skilled artisan would know that the computer readable medium is not limited to any specific type of storage devices and includes any kind of device, including but not limited to CDs, floppy disks, ROMs, hard disks, magnetic tapes and internet downloads, in which computer instructions can be stored and/or transmitted. Transmission of the computer code through a network or through wireless transmission means is also within the scope of this invention. Additionally, computer code/instructions include, but are not limited to, source, object and executable code and can be in any language including high-level languages, assembly language and machine language.

## Claims

1. A print data output system for outputting print data to a printer having a plurality of built-in printing engines, comprising
a printing engine selecting means which selects one of the plurality of built-in printing engines,
a print data generating means which generates print data conforming to the printing engine selected by the printing engine selecting means, and
a print data output means which outputs the print data generated by the print data generating means to said printer.

2. A print data output system as defined in Claim 1 further comprising a destination direction means which generates printing engine designating information for designating the printing engine selected by the printing engine selecting means and attaches the printing engine designating information to the print data.

3. A print data output system as defined in Claim 1 or 2 further comprising a print linking direction means which sets whether printing papers on which a first piece of print data have been printed by one of the printing engines are to be printed with a second piece of print data by another printing engine, generates print linking information representing the contents of the setting, and attaches the print linking information to the print data.

4. A print data output system as defined in Claim 3 further comprising a printing side direction means which generates printing side designating information representing on which side of the printing paper the second piece of print data is to be printed and attaches the printing side designating information to the first or second piece of print data.

5. A print data output system as defined in any one of Claims 1 to 4 in which one of the printing engines is a stencil printing.

6. A print data output program for outputting print data to a printer having a plurality of built-in printing engines **characterized by** causing a computer to perform
a printing engine selecting procedure of selecting one of the printing engines,
a print data generating procedure of generating print data conforming to the printing engine selected by the printing engine selecting means, and
a print data output procedure of outputting the print data generated by the print data generating means to said printer.

7. A program as defined in Claim 6 which causes the computer to further perform a destination direction procedure of generating printing engine designating information for designating the printing engine selected by the printing engine selecting means and attaching the printing engine designating information to the print data.

8. A computer readable media on which a printing engine control program defined in Claim 6 or 7 is recorded.
